# EUROPEAN PATENT SPECIFICATION

(11) **EP 1 795 442 B1**
(45) Date of publication and mention of the grant of the patent: **16.02.2011**
(21) Application number: 06025259.0
(22) Date of filing: 06.12.2006
(51) Int. Cl.: B62K 25/28

(54) **Straddle-type vehicle**
Reitsitz-Fahrzeug
Véhicule de type monté à califourchon

(30) Priority: 08.12.2005 JP 2005355468
(43) Date of publication of application: 13.06.2007
(73) Proprietor: Yamaha Hatsudoki Kabushiki Kaisha, Iwata-shi, Shizuoka 438-8501 (JP)
(72) Inventor: Kubo, Shouichi, Iwata-shi Shizuoka-ken 438-8501 (JP); Nobuhira, Takayuki, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 188 657
- EP-A- 1 462 352
- GB-A- 2 086 319
- JP-A- 9 030 476

## Description

The present invention relates to a straddle-type vehicle such as motorcycle, scooter, snowmobile, buggy, etc., and more particular, to a technology, in which a connecting member for connection of a link and a rear arm is curved.

Conventionally, there are straddle-type vehicle such as motorcycles, etc. in which a damper, a rear arm, and a vehicle body are connected together through a link to thereby effectively suppress vibrations of a vehicle in running to heighten a comfort in running. For example, JP-A-9-30476 (Patent Document 1) discloses the following link.

The link is structured such that a connecting hole to a vehicle body side, a connecting hole to a rear arm, and a connecting hole to a damper are opened and are the same in dimension in a vehicle width direction. In addition, the link disclosed in the Patent Document 1 uses a gently arcuate connecting member for connection between the link and the rear arm.
Patent Document 1: JP-A-9-30476

By the way, with the link disclosed in the Patent Document 1, the gently arcuate connecting member is positioned below a damper but the gently arcuate connecting member cannot make it possible to arrange the damper below. Generally, other members such as an air cleaner, etc. are positioned close to one another above the damper, so that the damper is desirably arranged to be relatively low.

In addition, when a damper is made short in order to ensure a space above the damper, it becomes correspondingly hard to suppress vibrations of a vehicle in running, so that comfort in running is marred.

Also, when a link and a connecting member are shifted laterally of the damper in order to arrange a damper below, a corresponding bearing is needed to lead to an increase in cost.

GB-A 2 086 319 according to the preamble of claim 1 discloses a damping structure of a motorcycle for damping a rear arm pivotally connected to a vehicle body. Said damping structure comprises a damper pivotally connected to the vehicle body. A connecting member is pivotally connected to the rear arm. A link is pivotally connected to the vehicle body to the damper and to the connecting member. A lower end of the damper, in a fully extended state of the damper, is positioned below a plane defined by the central axis of the connections at both ends of the connecting member.

The invention has been thought of in view of the conventional situation and has its object to provide a straddle-type vehicle, which restricts an increase in cost while ensuring a space above a damper.

This objective is solved by a straddle-type vehicle comprising a damping structure for damping a rear arm pivotally connected to a vehicle body and supporting a rear wheel, said damping structure comprising a damper pivotally connected to the vehicle body, a connecting member pivotally connected to the rear arm, and a link pivotally connected to the vehicle body, to the damper and to the connecting member, respectively, wherein a lower end of the damper, in a fully extended state of the damper, is positioned below a plane defined by the central axis of the connections at both ends of the connection member. The connecting member includes a curved portion curved at a smaller radius of curvature than a first distance between the central axis of both ends of the connection member.

Preferable, the connecting member is curved downward to an extent so as to avoid an interference with the damper in the fully extended state.

According to another preferred embodiment, the rear arm is pivotally connected at a front end thereof to the vehicle body through a first connecting shaft and at a rear end thereof to the rear wheel, the connecting member is pivotally connected at one end thereof to the rear arm through a second connecting shaft, the link is pivotally connected to the vehicle body through a third connecting shaft and is pivotally connected to the remaining other end of the connecting member through a fourth connecting shaft, and the damper is pivotally connected at a lower end thereof to the link through a fifth connecting shaft, wherein the lower end of the damper is positioned below the plane which includes the central axes of the second connecting shaft and the fourth connecting shaft, which are positioned at both ends of the connecting member, in a fully extended state of the damper.

Further, preferably the connecting member extends substantially vertically downward over the curved portion from the connection end with the rear arm, in particular from the second connecting shaft in a fully extended state of the damper, and to extend substantially horizontally forward from the curved portion to the fourth connecting shaft.

According to a further preferred embodiment, a width, as viewed in side view, of the connecting member in an intermediate position between both ends of the connection member, in particular between the second connecting shaft and the fourth connecting shaft, which shafts are positioned at both ends of the connecting member, is larger than widths, as viewed in side view at the connection ends of the connection member, in particular of the second connecting shaft and the fourth connecting shaft.

Preferably, in a fully extended state of the damper, a first distance from the second connecting shaft to the fourth connecting shaft on the connecting member is equal to or larger than two times a second distance from the fourth connecting shaft to the fifth connecting shaft on the link.

Further, preferably the second distance from the fourth connecting shaft to the fifth connecting shaft on the link is larger than a third distance from the third connecting shaft to the fourth connecting shaft on the link.

Still further, preferably the third distance from the third connecting shaft to the fourth connecting shaft on the link is smaller than a fourth distance from the first connecting shaft to the third connecting shaft on the vehicle body.

Yet further, preferably the second distance from the fourth connecting shaft to the fifth connecting shaft on the link is smaller than the fourth distance from the first connecting shaft to the third connecting shaft on the vehicle body.

In the following, the present invention is explained in greater detail with respect to several embodiments thereof in conjunction with the accompanying drawings, wherein:
Fig. 1 is a side view showing a motorcycle according to an embodiment,
Fig. 2 is a side view showing an essential part of the motorcycle, and
Fig. 3 is a cross sectional view taken along the line III-III in Fig. 2.

### Description of Reference Numerals and Signs:

1: motorcycle (straddle-type vehicle)
2: connecting member
3: link
4: rear arm
4a: bracket portion
5: frame (vehicle body)
6: damper
7: rear wheel
8: air cleaner
9: engine (vehicle body)
11: first connecting shaft
12: second connecting shaft
13: third connecting shaft
14: fourth connecting shaft
15: fifth connecting shaft

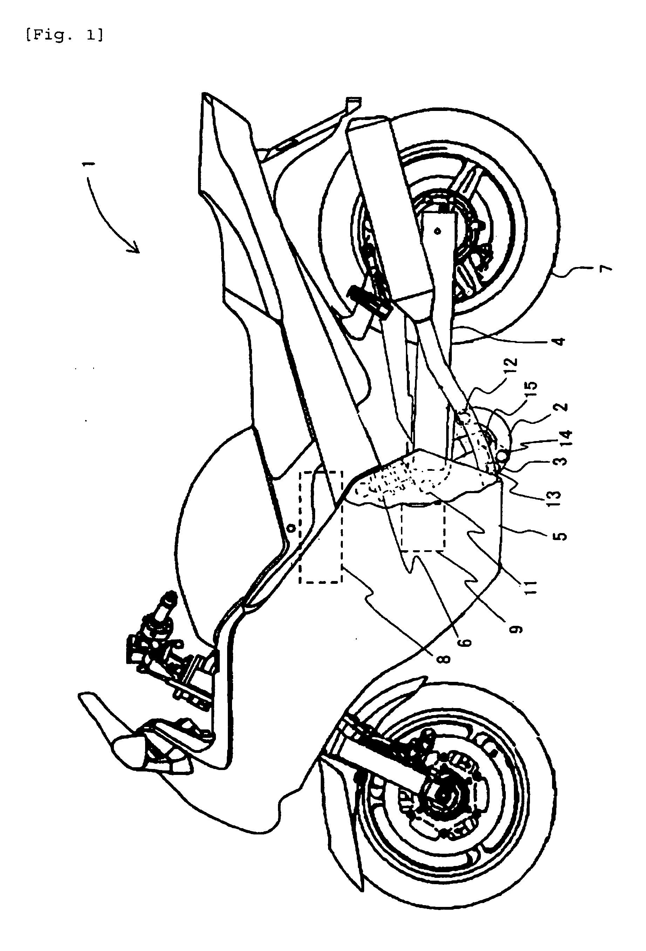

A motorcycle according to an embodiment will be described below with reference to the drawings. Fig. 1 is a side view showing a motorcycle according to an embodiment.

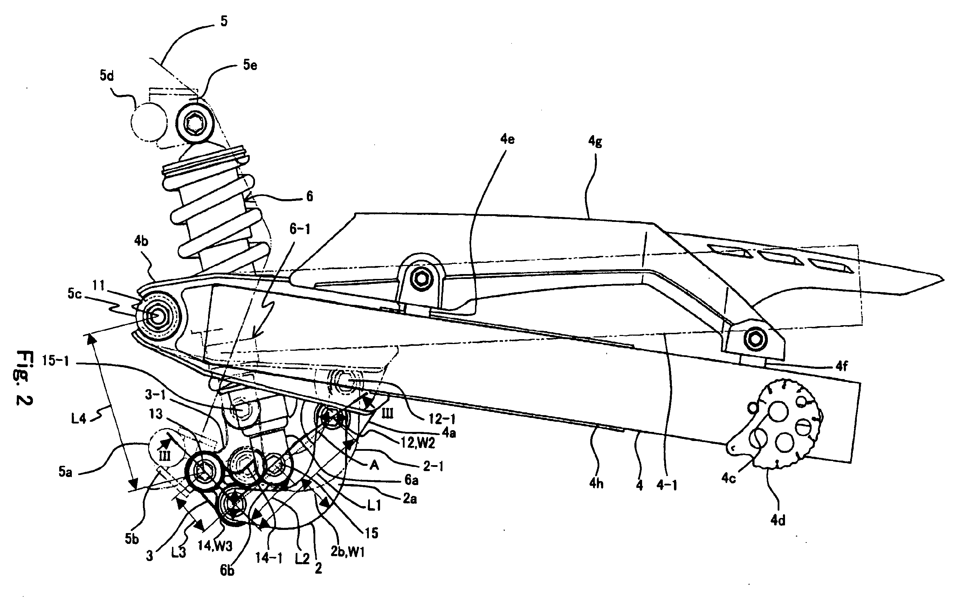

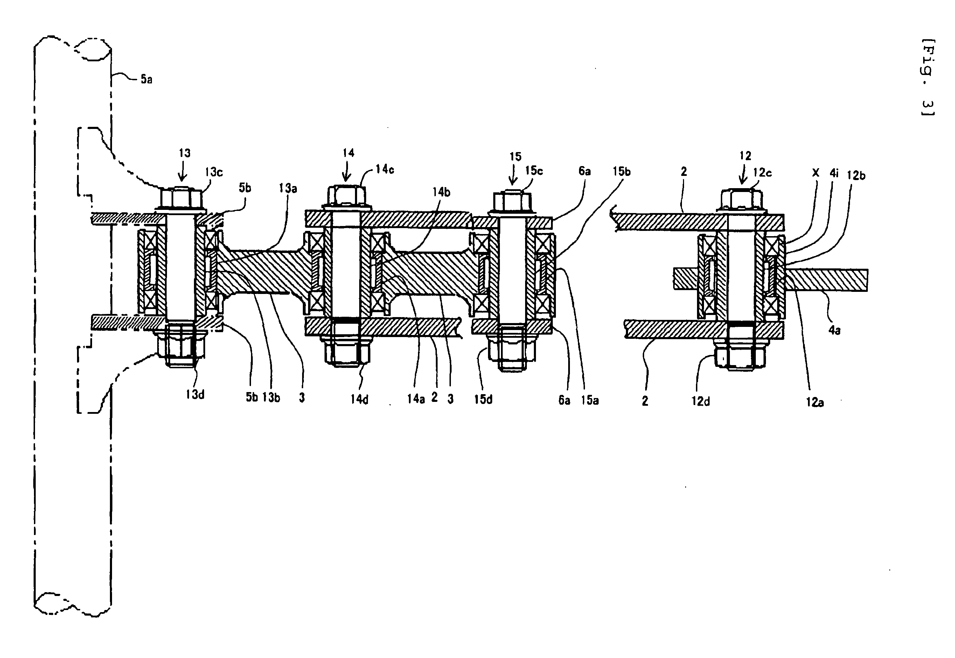

In the figure, with a motorcycle 1 as a straddle-type vehicle, a rear arm 4, a frame 5 as a vehicle body, and a damper 6 are connected together by means of connecting members 2 and a link 3. While details will be described with reference to Figs. 2 and 3, the connecting members 2 are connected pivotally to the rear arms 4 through a second connecting shaft 12. The link 3 is connected pivotally to the connecting member 2 through a fourth connecting shaft 14 and pivotally to the frame 5 through a third connecting shaft 13.

The rear arm 4 is connected pivotally at a front end thereof to the frame 5 through a first connecting shaft 11 and at a rear end thereof to a rear wheel 7. Also, the damper 6 is connected at an upper end thereof to the frame 5 and pivotally at a lower end thereof to the link 3 through a fifth connecting shaft 15. In addition, an air cleaner 8 is arranged above the damper 6. Also, an engine 9 as a vehicle body is arranged forwardly of the rear arm 4.

Fig. 2 is a side view showing an essential part of the motorcycle. Fig. 3 is a cross sectional view taken along the line III-III in Fig. 2. Referring to Figs. 2 and 3, a detailed explanation will be given to the connecting members 2, the link 3, the rear arm 4, the frame 5, and the damper 6 of the motorcycle 1 shown in Fig. 1.

In Fig. 2, the connecting members 2 comprise a central portion 2b made of a curved sheet metal, and is connected pivotally at one end thereof to a bracket portion 4a, which extends downward from the rear arm 4, through the second connecting shaft 12. The link 3 is substantially triangular-shaped (here, a V-shape having a long side) as viewed in side view. The link 3 is connected pivotally to a bracket portion 5b, which is arranged on a cross pipe 5a of the frame 5, through the third connecting shaft 13 and pivotally to the remaining other ends of the connecting members 2 through the fourth connecting shaft 14.

In addition, while connection of the respective connecting shafts will be described later with reference to Fig. 3, the connecting member 2 comprises a pair of left and right sheet metals, which are positioned in a manner to interpose the link 3 therebetween.

Also, the bracket portion 5b comprises a pair of left and right bracket portions 5b as shown in Fig. 3. Therefore, the link 3 is connected in a manner to be interposed by the bracket portions 5b.

A boss portion 4b at a front end of the rear arm 4 is connected pivotally to the first frame 5 through the first connecting shaft 11 (a cross pipe 5c) positioned above the third connecting shaft 13. Also, a rear end of the rear arm 4 is connected at a connection hole 4c to the rear wheel 7 shown in Fig. 1. The rear arm 4 and the rear wheel 7 are connected to each other with a snail cam chain puller 4d outside the rear arm 4, so that connection of the rear arm 4 and the rear wheel 7 is made firm.

In addition, the rear arm 4 comprises a pair of left and right members. A chain case 4g is connected to chain case mounts 4e, 4f in two front and rear locations on an upper surface of the left rear arm 4. Also, a cross pipe (not shown) supporting the pair of left and right rear arms 4 is arranged in the lower vicinity of the front chain case mount 4e. The rear arms 4 and the cross pipe are further firmly connected to each other by arm reinforcement portions 4h, which extend longitudinally of the rear arms 4.

An upper end of the damper 6 is connected pivotally to a bracket portion 5e arranged on a cross pipe 5d of the frame 5 positioned above the first connecting shaft 11, to which the rear arms 4 are connected. Also, a link mount 6a formed on a lower end of the damper 6 is connected pivotally to the link 3 through the fifth connecting shaft 15. Here, the link mount 6a is bifurcate such as substantially U-shaped or the like to be opened downward and connected to the link 3 in a manner to interpose the link 3 as shown in Fig. 3. Of course, the link mount 6a is not bifurcate in some cases where the link 3 is bifurcate or the like.

In addition, Fig. 2 shows respective constructions in a fully extended state, that is, at the time of a largest length of the damper 6 in a non-loaded state, positions of the connecting members 2, the link 3, the rear arms 4, the damper 6, etc. when the damper 6 is shortest are shown as connecting members 2-1, a link 3-1, rear arms 4-1, a damper 6-1, etc. by two-dot chain lines. Interlocking of these members will be described later.

Here, a lower end 6b of the damper 6 in a fully extended state is positioned below a plane (broken line A) including central axes of the second connecting shaft 12 and the fourth connecting shaft 14, which are positioned at both ends of the connecting members 2, and the connecting members 2 are curved downward so as to avoid an interference with the damper 6 in a fully extended state. In addition, the lower end 6b of the damper 6 is a lower end including the link mount 6a, etc. as shown in Fig. 2.

Also, the connecting members 2 include a curved portion 2a curved at a smaller radius of curvature than a first distance L1 from the second connecting shaft 12 positioned at one end thereof to the fourth connecting shaft 14 positioned at the other end thereof. Further, the connecting members 2 extend substantially vertically downward over the curved portions 2a from the second connecting shaft 12 in a fully extended state of the damper 6 to extend substantially horizontally forward from the curved portions 2a to the fourth connecting shaft 14.

Also, a width W1, as viewed in side view, of the connecting members 2 in intermediate positions 2b between the second connecting shaft 12 and the fourth connecting shaft 14 is larger than widths W2, W3, as viewed in side view, of the second connecting shaft 12 and the fourth connecting shaft 14.

In a fully extended state of the damper 6, the first distance L1 from the second connecting shaft 12 (toward the rear arm 4) to the fourth connecting shaft 14 (toward the link 3) on the connecting members 2 is equal to or larger than two times a second distance L2 from the fourth connecting shaft 14 (toward the connecting members 2) to the fifth connecting shaft 15 (toward the damper 6) on the link 3.

Also, the second distance L2 is larger than a third distance L3 from the third connecting shaft 13 (toward the frame 5) to the fourth connecting shaft 14 (toward the connecting member 2) on the link 3.

Further, the third distance L3 is equal to or smaller than a half of a fourth distance L4 from the first connecting shaft 11 (toward the rear arm 4) to the third connecting shaft 13 (toward the link 3) on the frame 5.

Furthermore, the second distance L2 is equal to or smaller than a half of the fourth distance L4.

Subsequently, connection of the second connecting shaft 12, the third connecting shaft 13, the fourth connecting shaft 14, and the fifth connecting shaft 15 will be described with reference to Fig. 3.

The pair of connecting members 2, 2 are connected rotatably at the second connecting shaft 12, which is a connection of the connecting members 2 and the rear arm, to a connecting hole portion 4i, which is formed on the bracket portion 4a of the rear arm, by a bearing 12a, a bush 12b, a flange bolt 12c, and flange nuts 12d. More specifically, the flange bolt 12c is extended through the bush 12b, which is inserted into the connecting hole portion 4i with the bearing 12a therebetween, whereby the connecting members 2, 2 are connected rotatably to the bracket portion 4a in a manner to interpose the bracket portion 4a therebetween. In addition, this way of connection is exemplary and it is of course possible to use another way of connection by the use of a bolt, nuts, washers, etc. in place of the flange bolt 12c and the flange nuts 12d.

Also, the link 3 is connected pivotally at the fourth connecting shaft 14 to the connecting members 2, 2 likewise by a bearing 14a, a bush 14b, a flange bolt 14c, and flange nuts 14d.

The link 3 is connected pivotally at the third connecting shaft 13, which is a connection with the frame 5, to the pair of bracket portions 5b, 5b, which are arranged on the cross pipe 5a of the frame, likewise by a bearing 13a, a bush 13b, a flange bolt 13c, and flange nuts 13d.

Further, the link mount 6a formed at the lower end of the damper is connected pivotally at the fifth connecting shaft 15 to the link 3 likewise by a bearing 15a, a bush 15b, a flange bolt 15c, and flange nuts 15d in a manner to interpose the link 3.

Subsequently, an explanation will be given to interlocking of the connecting members 2-1, the link 3-1, the rear arms 4-1, the damper 6-1, etc. shown in Fig. 2.

First, when a shock is applied to the rear wheel in running of the motorcycle 1 on a bad road, the rear arms 4-1 connected to the rear wheel turn upward about the first connecting shaft 11, which is a connection with the frame 5. As the rear arms 4-1 tum upward, the connecting members 2-1 connected to the rear arms 4-1 are moved upward.

Also, as the connecting members 2-1 are moved upward, the fourth connecting shaft 14-1, which is a connection with the link 3-1, also moves upward and the link 3-1 turns upward about the third connecting shaft 13, which is a connection with the frame 5. Further, as the link 3-1 turns upward, the fifth connecting shaft 15-1, which is a connection with the damper 6-1 of the link 3-1, is also moved upward, so that the damper 6 connected at an upper end thereof to the frame 5 is compressed to absorb a shock.

With the motorcycle 1 according to the embodiment, the lower end 6b of the damper 6 in a fully extended state is positioned below the plane A including the second connecting shaft 12 (toward the rear arm 4) and the fourth connecting shaft 14 (toward the link 3), which are positioned at both ends of the connecting members 2, and the connecting members 2 are curved downward so as to avoid an interference with the damper 6, whereby the following effects are produced. That is, since a surplus cost as in the case where the connecting members 2 are shifted laterally of the damper 6 is not charged even when a space for the air cleaner 8, etc. positioned above the damper 6 is ensured by arranging the damper 6 below the plane A including the second connecting shaft 12 and the fourth connecting shaft 14, which are positioned at both ends of the connecting members 2, it becomes possible to restrict an increase in cost while ensuring a space above the damper 6.

Also, since the connecting members 2 are curved downward without being shifted laterally of the damper 6, it becomes also possible to readily clamp the fifth connecting shaft 15, which connects between the damper 6 and the link 3, from laterally of the motorcycle 1.

Also, the connecting members 2 include a curved portion 2a curved at a smaller radius of curvature than the first distance L1 from the second connecting shaft 12 to the fourth connecting shaft 14, which shafts are positioned at both ends thereof, whereby it is possible to arrange the damper 6 further below, thus enabling further ensuring that space above the damper 6, in which the air cleaner 8 or the like is positioned.

Further, the connecting members 2 extend substantially vertically downward over the curved portions 2a from the second connecting shaft 12 in a fully extended state of the damper 6 to extend substantially horizontally forward from the curved portions 2a to the fourth connecting shaft 14, whereby it is possible to arrange the damper 6 further below, thus enabling further ensuring a space above the damper 6.

Also, since a width W1, as viewed in side view, of the connecting members 2 in intermediate positions 2b between the second connecting shaft 12 and the fourth connecting shaft 14, which shafts are positioned at both ends thereof, is larger than widths W2, W3, as viewed in side view, of the second connecting shaft 12 and the fourth connecting shaft 14, it is possible to ensure the strength of the connecting members 2 even when the connecting members 2 are curved largely.

Also, in the case where in a fully extended state of the damper 6, the first distance L1 from the second connecting shaft 12 (toward the rear arm 4) to the fourth connecting shaft 14 (toward the link 3) on the connecting members 2 is equal to or larger than two times the second distance L2 from the fourth connecting shaft 14 (toward the connecting members 2) to the fifth connecting shaft 15 (toward the damper 6) on the link 3, the damper 6 must be especially arranged above or laterally of the connecting members 2 because the damper 6 approaches the fourth connecting shaft 14, but it becomes possible to further effectively restrict an increase in cost while ensuring a space above the damper 6.

Also, in the case where the second distance L2 is larger than the third distance L3 from the third connecting shaft 13 (toward the frame 5) to the fourth connecting shaft 14 (toward the connecting member 2) on the link 3, the damper 6 must be arranged, in particular, above or laterally of the connecting members 2 because the fourth connecting shaft 14 of the link 3 becomes close to the frame 5 (the fifth connecting shaft 15) and the connecting members 2 are positioned above, but it becomes possible to further effectively restrict an increase in cost while ensuring a space above the damper 6.

Also, in the case where the third distance L3 is smaller than the fourth distance L4 from the first connecting shaft 11 (toward the rear arm 4) to the third connecting shaft 13 (toward the link 3) on the frame 5, preferably equal to or smaller than a half thereof, the damper 6 must be arranged, in particular, above or laterally of the connecting members 2 because the link 3 becomes small in a space between the frame 5 and the connecting members 2 to make the connecting members 2 and the damper 6 liable to interfere with each other, but it becomes possible to further effectively restrict an increase in cost while ensuring a space above the damper 6.

Also, in the case where the second distance L2 is smaller than the fourth distance L4, preferably equal to or smaller than a half thereof, the damper 6 must be arranged, in particular, above or laterally of the connecting members 2 because the fifth connecting shaft 15, which is a connection with the damper 6 of the link 3, becomes close to the connecting members 2 relative to a space between the frame 5 and the link 3, but it becomes possible to further effectively restrict an increase in cost while ensuring a space above the damper 6.

In addition, according to the embodiment, the connecting member 2 comprises a pair of left and right connecting members 2 but the motorcycle 1 according to the embodiment is only exemplary and the invention has a feature in that the connecting member 2 is curved so as to avoid an interference with the damper 6. Therefore, there is caused no problem even when the connecting member 2 does not comprise a pair of left and right connecting members 2.

Also, since a vehicle body in the present teaching is not limited to the frame 5 but includes the engine 9 shown in Fig. 1, a position, to which the rear arm 4 or the like is connected, is not limited to the frame 5. Further, the connecting member according to the present teaching is not limited to a shape of the connecting member 2, the positional relationship of the first to fifth connecting shafts, etc., which are referred to as a preferred example in the embodiment.

The above description discloses (amongst others), in order to solve the present problem, an embodiment of a straddle-type vehicle comprising a rear arm connected pivotally at a front end thereof to a vehicle body through a first connecting shaft and at a rear end thereof to a rear wheel, a connecting member connected pivotally at one end thereof to the rear arm through a second connecting shaft, a link connected pivotally to the vehicle body through a third connecting shaft and pivotally to the remaining other end of the connecting member through a fourth connecting shaft, and a damper connected pivotally at a lower end thereof to the link through a fifth connecting shaft, and wherein a lower end of the damper is positioned below a plane including central axes of the second connecting shaft and the fourth connecting shaft, which are positioned at both ends of the connecting member, in a fully extended state of the damper and the connecting member is curved downward so as to avoid an interference with the damper in the fully extended state.

Preferably, the connecting member includes a curved portion curved at a smaller radius of curvature than a first distance from the second connecting shaft positioned at one end thereof to the fourth connecting shaft positioned at the other end thereof.

At this time, it suffices that the connecting member extend substantially vertically downward over the curved portion from the second connecting shaft in a fully extended state of the damper to extend substantially horizontally forward from the curved portion to the fourth connecting shaft.

Preferably, a width, as viewed in side view, of the connecting member in an intermediate position between the second connecting shaft and the fourth connecting shaft, which shafts are positioned at both ends of the connecting member, is larger than widths, as viewed in side view, of the second connecting shaft and the fourth connecting shaft.

Preferably, in a fully extended state of the damper, a first distance from the second connecting shaft to the fourth connecting shaft on the connecting member is equal to or larger than two times a second distance from the fourth connecting shaft to the fifth connecting shaft on the link.

Preferably, a second distance from the fourth connecting shaft to the fifth connecting shaft on the link is larger than a third distance from the third connecting shaft to the fourth connecting shaft on the link.

Preferably, a third distance from the third connecting shaft to the fourth connecting shaft on the link is smaller than a fourth distance from the first connecting shaft to the third connecting shaft on the vehicle body.

Preferably, a second distance from the fourth connecting shaft to the fifth connecting shaft on the link is smaller than a fourth distance from the first connecting shaft to the third connecting shaft on the vehicle body.

According to the present teaching, a lower end of the damper in a fully extended state is positioned below a plane including central axes of the second connecting shaft (toward the rear arm) and the fourth connecting shaft (toward the link), which are positioned at both ends of the connecting member, and the connecting member is curved downward so as to avoid an interference with the damper, whereby the following effects are produced. That is, since a surplus cost as in the case where the connecting member is shifted laterally of the damper is not charged even when a space above the damper is ensured by arranging the damper below a plane including central axes of the two connecting shaft on the connecting member, it becomes possible to restrict an increase in cost while ensuring a space above the damper.

The description above further discloses, according to a first preferred aspect, an embodiment of a straddle-type vehicle comprising a rear arm connected pivotally at a front end thereof to a vehicle body through a first connecting shaft and at a rear end thereof to a rear wheel, a connecting member connected pivotally at one end thereof to the rear arm through a second connecting shaft, a link connected pivotally to the vehicle body through a third connecting shaft and pivotally to the remaining other end of the connecting member through a fourth connecting shaft, and a damper connected pivotally at a lower end thereof to the link through a fifth connecting shaft, and wherein a lower end of the damper is positioned below a plane including central axes of the second connecting shaft and the fourth connecting shaft, which are positioned at both ends of the connecting member, in a fully extended state of the damper and the connecting member is curved downward so as to avoid an interference with the damper in the fully extended state. Further, the connecting member includes a curved portion curved at a smaller radius of curvature than a first distance from the second connecting shaft positioned at one end thereof to the fourth connecting shaft positioned at the other end thereof.

Further, according to a second preferred aspect, the connecting member may extend substantially vertically downward over the curved portion from the second connecting shaft in a fully extended state of the damper to extend substantially horizontally forward from the curved portion to the fourth connecting shaft.

Further, according to a third preferred aspect, a width, as viewed in side view, of the connecting member in an intermediate position between the second connecting shaft and the fourth connecting shaft, which shafts are positioned at both ends of the connecting member, may be larger than widths, as viewed in side view, of the second connecting shaft and the fourth connecting shaft.

Further, according to a fourth preferred aspect, in a fully extended state of the damper, a first distance from the second connecting shaft to the fourth connecting shaft on the connecting member may be equal to or larger than two times a second distance from the fourth connecting shaft to the fifth connecting shaft on the link.

Further, according to a fifth preferred aspect, a second distance from the fourth connecting shaft to the fifth connecting shaft on the link may be larger than a third distance from the third connecting shaft to the fourth connecting shaft on the link.

Further, according to a sixth preferred aspect, a third distance from the third connecting shaft to the fourth connecting shaft on the link may be smaller than a fourth distance from the first connecting shaft to the third connecting shaft on the vehicle body.

Further, according to an seventh preferred aspect, a second distance from the fourth connecting shaft to the fifth connecting shaft on the link may be smaller than a fourth distance from the first connecting shaft to the third connecting shaft on the vehicle body.

In addition, according to a particularly preferred embodiment, in order to restrict an increase in cost while ensuring a space above a damper, there is disclosed a straddle-type vehicle comprising a rear arm 4 connected pivotally at a front end thereof to a vehicle body (5) through a first connecting shaft 11 and at a rear end thereof to a rear wheel 7, a connecting member 2 connected pivotally at one end thereof to the rear arm 4 through a second connecting shaft 12, a link 3 connected pivotally to the vehicle body (5) through a third connecting shaft 13 and pivotally to the remaining other end of the connecting member 2 through a fourth connecting shaft 14, and a damper 6 connected pivotally at a lower end thereof to the link 3 through a fifth connecting shaft 15, and wherein a lower end 6b of the damper 6 is positioned below a plane A including central axes of the second connecting shaft 12 and the fourth connecting shaft 14, which are positioned at both ends of the connecting member 2, in a fully extended state of the damper 6 and the connecting member 2 is curved downward so as to avoid an interference with the damper 6 in a fully extended state.

## Claims

1. Straddle-type vehicle comprising a damping structure for damping a rear arm (4) pivotally connected to a vehicle body (5) and supporting a rear wheel (7), said damping structure comprising a damper (6) pivotally connected to the vehicle body (5), a connecting member (2) pivotally connected to the rear arm (5), and a link (3) pivotally connected to the vehicle body (5), to the damper (6) and to the connecting member (2), respectively, wherein a lower end (6b) of the damper (6), in a fully extended state of the damper, is positioned below a plane (A) defined by the central axis of the connections at both ends of the connection member (2),
**characterized in that**
the connecting member (2) includes a curved portion (2a) curved at a smaller radius of curvature than a first distance (L1) between the central axes of both ends of the connection member (2).

2. Straddle-type vehicle according to claim 1, **characterized in that** the connecting member (2) is curved downward to an extent so as to avoid an interference with the damper (6) in the fully extended state.

3. Straddle-type vehicle according to claim 1 or 2, **characterized in that** the rear arm (4) is pivotally connected at a front end thereof to the vehicle body (5) through a first connecting shaft (11) and at a rear end thereof to the rear wheel (7), the connecting member (2) is pivotally connected at one end thereof to the rear arm (4) through a second connecting shaft (12), the link (3) is pivotally connected to the vehicle body (5) through a third connecting shaft (13) and is pivotally connected to the remaining other end of the connecting member (2) through a fourth connecting shaft (14), and the damper is pivotally connected at a lower end thereof to the link (3) through a fifth connecting shaft (15), wherein the lower end (6b) of the damper (6) is positioned below the plane (A) which includes the central axes of the second connecting shaft (12) and the fourth connecting shaft (14), which are positioned at both ends of the connecting member (2), in a fully extended state of the damper.

4. Straddle-type vehicle according to one of the claims 1 to 3, **characterized in that** the connecting member (2) extends substantially vertically downward over the curved portion (2a) from the connection end with the rear arm (4), in particular from the second connecting shaft (12) in a fully extended state of the damper (6), and to extend substantially horizontally forward from the curved portion to the fourth connecting shaft (14).

5. Straddle-type vehicle according to one of the claims 1 to 4, **characterized in that** a width (W1), as viewed in side view, of the connecting member (2) in an intermediate position between both ends of the connection member (2), in particular between the second connecting shaft (12) and the fourth connecting shaft (14), which shafts are positioned at both ends of the connecting member (2), is larger than widths (W2, W3), as viewed in side view at the connection ends of the connection member (2), in particular of the second connecting shaft (12) and the fourth connecting shaft (14).

6. Straddle-type vehicle according to one of the claims 3 to 5, **characterized in that** in a fully extended state of the damper (6), a first distance (L1) from the second connecting shaft (12) to the fourth connecting shaft (14) on the connecting member (2) is equal to or larger than two times a second distance (L2) from the fourth connecting shaft (14) to the fifth connecting shaft (15) on the link (3).

7. Straddle-type vehicle according to one of the claims 3 to 6, **characterized in that** the second distance (L2) from the fourth connecting shaft (14) to the fifth connecting shaft (15) on the link (3) is larger than a third distance (L3) from the third connecting shaft (13) to the fourth connecting shaft (14) on the link (3).

8. Straddle-type vehicle according to one of the claims 3 to 7, **characterized in that** the third distance (L3) from the third connecting shaft (13) to the fourth connecting shaft (14) on the link (3) is smaller than a fourth distance (L4) from the first connecting shaft (11) to the third connecting shaft (13) on the vehicle body (5).

9. Straddle-type vehicle according to one of the claims 3 to 8, **characterized in that** the second distance (L2) from the fourth connecting shaft (14) to the fifth connecting shaft (15) on the link (3) is smaller than the fourth distance (L4) from the first connecting shaft (11) to the third connecting shaft (13) on the vehicle body (5).

## Patentansprüche

1. Fahrzeug vom Spreizsitz- Typ, aufweisend einen Dämpfungsaufbau zum Dämpfen eines hinteren Arms (4), schwenkbar mit einer Fahrzeugkarosserie (5) verbunden und der ein Hinterrad (7) lagert, wobei der Dämpfungsaufbau aufweist einen Dämpfer (6), schwenkbar mit der Fahrzeugkarosserie (5) verbunden, ein Verbindungsteil (2), schwenkbar mit dem hinteren Arm (4) verbunden und eine Verbindung (3), die jeweils schwenkbar mit der Fahrzeugkarosserie (5) jeweils mit dem Dämpfer (6) und dem Verbindungsteil (2) verbunden ist, wobei ein unteres Ende (6b) des Dämpfers (6b) in einem vollständig verlängerten Zustand des Dämpfers unter einer Ebene (A), gebildet durch die Mittelachse der Verbindungen an beiden Enden des Verbindungsteils (2), positioniert ist,
**dadurch gekennzeichnet, dass**
das Verbindungsteil (2) einen gekrümmten Abschnitt enthält, gekrümmt mit einem kleineren Krümmungsradius als ein erster Abstand (L1) zwischen der Mittelachse der beiden Enden des Verbindungsteils (2).

2. Fahrzeug vom Spreizsitz- Typ nach Anspruch 1, **dadurch gekennzeichnet, dass**
das Verbindungsteil (2) in einem Ausmaß nach unten gekrümmt ist, um eine Störung mit dem Dämpfer (6) in dem vollständig verlängerten Zustand zu vermeiden.

3. Fahrzeug vom Spreizsitz- Typ nach Anspruch 1 oder 2, **dadurch gekennzeichnet, dass** der hintere Arm (4) an seinem vorderen Ende mit der Fahrzeugkarosserie (5) durch eine erste Verbindungswelle (11) und an seinem hinteren Ende mit einem Hinterrad (7) verbunden ist, wobei das Verbindungsteil (2) an seinem Ende mit dem hinteren Arm (4) durch eine zweite Verbindungswelle (12) schwenkbar verbunden ist, wobei die Verbindung (3) schwenkbar mit der Fahrzeugkarosserie (5) durch eine dritte Verbindungswelle (13) verbunden ist und schwenkbar mit dem verbleibenden anderen Ende des Verbindungsteiles (2) durch eine vierte Verbindungswelle (14) verbunden ist, und der Dämpfer schwenkbar an seinem unteren Ende mit der Verbindung (3) durch eine fünfte Verbindungswelle (15) verbunden ist, wobei das untere Ende (6b) des Dämpfers (6) unter der Ebene (A) platziert ist, die die Mittelachsen der zweiten Verbindungswelle (12) und die vierte Verbindungswelle enthält, die an beiden Enden des Verbindungsteiles (2) in einem vollständig verlängerten Zustand des Dämpfers positioniert sind.

4. Fahrzeug vom Spreizsitz- Typ nach einem der Ansprüche 1 bis 3, **dadurch gekennzeichnet, dass** sich das Verbindungsteil (2) im Wesentlichen vertikal nach unten über den gekrümmten Abschnitt (2a) von dem Verbindungsende mit dem hinteren Arm (4), insbesondere von der zweiten Verbindungswelle (12) in einem vollständig verlängerten Zustand des Dämpfers (6), erstreckt und um sich im Wesentlichen nach vorn von dem gekrümmten Abschnitt zu der vierten Verbindungswelle (14) zu erstrecken.

5. Fahrzeug vom Spreizsitz- Typ nach einem der Ansprüche 1 bis 4, **dadurch gekennzeichnet, dass** eine Breite (W1), wenn von der Seite gesehen, des Verbindungsteils (2) in einer Zwischenposition zwischen beiden Enden des Verbindungsteiles (2), insbesondere zwischen der zweiten Verbindungswelle (12) und der vierten Verbindungswelle (14), wobei diese Wellen an beiden Enden des Verbindungsteiles (2) positioniert sind, größer als die Breiten (W2, W3), wenn in der Seitenansicht gesehen, an den Verbindungsenden des Verbindungsteiles (2) sind, insbesondere der zweiten Verbindungswelle (12) und der vierten Verbindungswelle (14).

6. Fahrzeug vom Spreizsitz- Typ nach einem der Ansprüche 3 bis 5, **dadurch gekennzeichnet, dass** in einem vollständig verlängerten Zustand des Dämpfers (6) ein erster Abstand (L1) von der zweiten Verbindungswelle (12) zu der vierten Verbindungswelle (14) an dem Verbindungsteil (2) gleich zu oder größer als das Zeifache eines zweiten Abstandes (L2) von der vierten Verbindungswelle (14) zu der fünften Verbindungswelle (15) an der Verbindung (3) ist.

7. Fahrzeug vom Spreizsitz- Typ nach einem der Ansprüche 3 bis 6, **dadurch gekennzeichnet, dass** der zweite Abstand (L2) von der vierten Verbindungswelle (14) zu der fünften Verbindungswelle (15) an der Verbindung (3) größer als ein dritter Abstand (L3) von der dritten Verbindungswelle (13) zu der vierten Verbindungswelle (14) an der Verbindung (3) ist.

8. Fahrzeug vom Spreizsitz- Typ nach einem der Ansprüche 3 bis 7, **dadurch gekennzeichnet, dass** der dritte Abstand (L3) von der dritten Verbindungswelle (13) zu der vierten Verbindungswelle (14) an der Verbindung (3) kleiner als ein vierter Abstand (L4) von der ersten Verbindungswelle (11) zu der dritten Verbindungswelle (13) an der Fahrzeugkarosserie (5) ist.

9. Fahrzeug vom Spreizsitz- Typ nach einem der Ansprüche 3 bis 8, **dadurch gekennzeichnet, dass** der zweite Abstand (L2) von der vierten Verbindungswelle (14) zu der fünften Verbindungswelle (15) an der Verbindung (3) kleiner als der vierte Abstand (L4) von der ersten Verbindungswelle (11) zu der dritten Verbindungswelle (13) an der Fahrzeugkarosserie (5) ist.

## Revendications

1. Véhicule du type à enfourcher comprenant une structure d'amortissement pour amortir un bras arrière (4) relié pivotant à un corps de véhicule (5) et supportant une roue arrière (7), ladite structure d'amortissement comprenant un amortisseur (6) relié pivotant au corps de véhicule (5), un élément de liaison (2) relié pivotant au bras arrière (4), et une biellette (3) reliée pivotante au corps de véhicule (5), à l'amortisseur (6) et à l'élément de liaison (2), respectivement, étant précisé qu'une extrémité inférieure (6b) de l'amortisseur (6), dans un état complètement déployé de l'amortisseur, se trouve sous un plan (A) défini par les axes centraux des liaisons au niveau des deux extrémités de l'élément de liaison (2),
**caractérisé en ce que** l'élément de liaison (2) comprend une partie courbe (2a) courbée suivant un rayon de courbure plus petit qu'une première distance (L1) entre les axes centraux au niveau des deux extrémités de l'élément de liaison (2).

2. Véhicule du type à enfourcher selon la revendication 1, **caractérisé en ce que** l'élément de liaison (2) est courbé vers le bas de manière à éviter une interférence avec l'amortisseur (6) dans son état complètement déployé.

3. Véhicule du type à enfourcher selon la revendication 1 ou 2, **caractérisé en ce que** le bras arrière (4) est relié pivotant, à une extrémité avant, au corps de véhicule (5) par une première tige de liaison (11) et, à une extrémité arrière, à la roue arrière (7), l'élément de liaison (2) est relié pivotant, à une extrémité, au bras arrière (4) par une deuxième tige de liaison (12), la biellette (3) est reliée pivotante au corps de véhicule (5) par une troisième tige de liaison (13) et est reliée pivotante à l'autre extrémité de l'élément de liaison (2) par une quatrième tige de liaison (14), et l'amortisseur est relié pivotant, à une extrémité inférieure, à la biellette (3) par une cinquième tige de liaison (15), l'extrémité inférieure (6b) de l'amortisseur (6) se trouvant sous le plan (A) qui comprend les axes centraux de la deuxième tige de liaison (12) et de la quatrième tige de liaison (14), qui se trouvent aux deux extrémités de l'élément de liaison (2), dans un état complètement déployé de l'amortisseur.

4. Véhicule du type à enfourcher selon l'une des revendications 1 à 3, **caractérisé en ce que** l'élément de liaison (2) s'étend globalement à la verticale vers le bas, avec la partie courbe (2a), à partir de l'extrémité de liaison avec le bras arrière (4), en particulier à partir de la deuxième tige de liaison (12) dans un état complètement déployé de l'amortisseur (6), et globalement à l'horizontale vers l'avant à partir de la partie courbe jusqu'à la quatrième tige de liaison (14).

5. Véhicule du type à enfourcher selon l'une des revendications 1 à 4, **caractérisé en ce qu'**une largeur (W1), considérée sur une vue latérale, de l'élément de liaison (2) en un point intermédiaire entre les deux extrémités de celui-ci, en particulier entre la deuxième tige de liaison (12) et la quatrième tige de liaison (14), lesquelles tiges se trouvent aux deux extrémités de l'élément de liaison (2), est supérieure aux largeurs (W2, W3), considérées sur une vue latérale, au niveau des extrémités de liaison de l'élément de liaison (2), en particulier de la deuxième tige de liaison (12) et de la quatrième tige de liaison (14).

6. Véhicule du type à enfourcher selon l'une des revendications 3 à 5, **caractérisé en ce que** dans un état complètement déployé de l'amortisseur (6), une première distance (L1) entre la deuxième tige de liaison (12) et la quatrième tige de liaison (14) sur l'élément de liaison (2) est égale ou supérieure à deux fois une deuxième distance (L2) entre la quatrième tige de liaison (14) et la cinquième tige de liaison (15) sur la biellette (3).

7. Véhicule du type à enfourcher selon l'une des revendications 3 à 6, **caractérisé en ce que** la deuxième distance (L2) entre la quatrième tige de liaison (14) et la cinquième tige de liaison (15) sur la biellette (3) est supérieure à une troisième distance (L3) entre la troisième tige de liaison (13) et la quatrième tige de liaison (14) sur la biellette (3).

8. Véhicule du type à enfourcher selon l'une des revendications 3 à 7, **caractérisé en ce que** la troisième distance (L3) entre la troisième tige de liaison (13) et la quatrième tige de liaison (14) sur la biellette (3) est inférieure à une quatrième distance (L4) entre la première tige de liaison (11) et la troisième tige de liaison (13) sur le corps de véhicule (5).

9. Véhicule du type à enfourcher selon l'une des revendications 3 à 8, **caractérisé en ce que** la deuxième distance (L2) entre la quatrième tige de liaison (14) et la cinquième tige de liaison (15) sur la biellette (3) est inférieure à la quatrième distance (L4) entre la première tige de liaison (11) et la troisième tige de liaison (13) sur le corps de véhicule (5).
